# EUROPÄISCHE PATENTSCHRIFT

(11) **EP 3 653 427 B1**
(45) Veröffentlichungstag und Bekanntmachung des Hinweises auf die Patenterteilung: **29.06.2022**
(21) Anmeldenummer: 19211460.1
(22) Anmeldetag: 06.05.2016
(51) Int. Cl.: B60K 35/00, B60K 37/06, F16H 59/02

(54) **ANZEIGEN- UND BEDIENVORRICHTUNG FÜR EINE FAHRZEUGKOMPONENTE**
DISPLAY AND OPERATING DEVICE FOR A VEHICLE COMPONENT
DISPOSITIF D'AFFICHAGE ET DE COMMANDE POUR UN COMPOSANT DE VÉHICULE

(30) Priorität: 07.05.2015 DE 102015208467
(43) Veröffentlichungstag der Anmeldung: 20.05.2020
(62) Teilanmeldung aus: 16723692.6
(73) Patentinhaber: Behr-Hella Thermocontrol GmbH, 59557 Lippstadt (DE)
(72) Erfinder: Vogt, Frank, 59557 Lippstadt (DE)
(74) Vertreter: dompatent von Kreisler Selting Werner - Partnerschaft von Patent- und Rechtsanwälten mbB

(56) Entgegenhaltungen:
- JP-A- 2007 008 246
- US-A1- 2010 214 213

## Beschreibung

Die Erfindung betrifft eine Anzeigen- und Bedienvorrichtung für eine Fahrzeugkomponente, bei der es sich insbesondere um ein Radio, ein CD- und/oder DVD- o.dgl. Audio- und/oder Video-Abspielgerät, ein Navigationsgerät, ein Infotainment-Gerät, ein Heizungs-, Lüftungs- und/oder Klimasteuergerät oder um ein Mensch-Maschine-Interface handelt.

Derartige Anzeigen- und Bedienvorrichtungen werden insbesondere in Mittelkonsolen von Fahrzeugen eingesetzt, um diverse Betriebsparameter von Fahrzeugkomponenten einzugeben sowie um Informationen bezüglich der Fahrzeugkomponenten oder des Fahrzeuges anzuzeigen.

Dabei werden für die Eingabe der Betriebsparameter häufig mechanische Drehsteller, Dreh-/Drücksteller, Gangwahlhebel oder mechanische Tasten eingesetzt. Diese mechanischen Bedienvorrichtungen dienen etwa dazu, die Lautstärke eines Multimedia-Gerätes, die Eingabeparameter eines Navigationsgerätes oder den Gang in einem Fahrzeug einzustellen. Dabei sind die häufig zum Einsatz kommenden mechanischen Bedientasten auch oft mit einer LED-Signalleuchte ausgestattet, welche es ermöglicht, dem Fahrer bestimmte Betriebsparameter anzuzeigen. Dadurch wird dem Fahrer beispielsweise signalisiert, dass die Klimaanlage oder die Heckscheibenheizung eingeschaltet ist.

In WO-A-2009/045671 ist eine Bedienvorrichtung für ein Fahrzeug offenbart. Bei dieser Bedienvorrichtung ist ein Drehsteller inmitten von vier Touchpads angeordnet. Zwischen den einzelnen Touchpads entstehen dadurch offensichtlich Zwischenräume. Sowohl der Drehsteller als auch die einzelnen Touchpads dienen der Bedienung von einzelnen Fahrzeugkomponenten. Weder der Drehsteller, noch die Touchpads sind dazu ausgelegt, Informationen bezüglich der Fahrzeugkomponenten anzuzeigen.

Weitere Bedienvorrichtungen ohne Anzeigefunktion sind in den Druckschriften DE-A-10 2011 108 214, DE-A-10 2004 019 893, DE-A-10 2010 010 574, JP-A-2007 008 246 sowie in DE-A-10 2008 023 231 beschrieben. Darüber hinaus sind in den Druckschriften US-A-2011/0025488 und US-A-2003/0188594 weitere Bedienvorrichtungen offenbart.

In US-A-2010/0214213 ist eine Bedieneinheit für ein Fahrzeug beschrieben, bei der auf einem Display ein Drehknopf angeordnet ist, mit dem sich in Abhängigkeit von durch den Bediener wählbaren Einstellungen verschiedene Komponenten eines Fahrzeugs steuern lassen. Allerdings lassen sich auf dem Display nur diejenigen Informationen anzeigen, die die gerade aktuell mit dem Drehknopf steuerbare Fahrzeugkomponente betreffen.

Ein häufiges Problem bei bekannten Anzeigen- und Bedienvorrichtungen liegt darin, dass zwischen den mechanischen Bedientasten Zwischenräume vorhanden sind, in die bei Unachtsamkeit des Fahrers oder der Fahrzeuginsassen beim Verzehr von Genussnahrungs- und/oder Lebensmitteln im Fahrzeug Speisereste oder Flüssigkeit eindringen können. Bekanntermaßen nimmt der Verzehr von Speisen und Getränken, insbesondere auf langen Fahrtstrecken, immer mehr zu, so dass auch die meisten Fahrzeuge heutzutage mit Getränkehaltern ausgestattet sind. Beim Verzehr von Speisen und Getränken kann dann durch eine kurze Unaufmerksamkeit oder auch durch Unebenheiten oder Störungen der befahrenen Straße leicht Flüssigkeit in die Bedientasten-Zwischenräume gelangen, mit der Gefahr der Beschädigung oder Zerstörung der darunter liegenden Elektronik.

Der Erfindung liegt daher die Aufgabe zugrunde, eine Anzeigen- und Bedienvorrichtung zu schaffen, welche gänzlich ohne Bedientasten-Zwischenräume auskommt, so dass das Eindringen von Flüssigkeiten oder Speisen in die Anzeigen- und Bedienvorrichtung und eine dadurch verursachte Beschädigung oder Zerstörung dieser Vorrichtung ausgeschlossen oder zumindest deutlich erschwert wird.

Zur Lösung dieser Aufgabe wird mit der Erfindung eine Anzeigen- und Bedienvorrichtung für mindestens eine Fahrzeugkomponente, bei der es sich insbesondere um ein Radio, eine CD- und/oder DVD- o.dgl. Audio- und/oder Video-Abspielgerät, ein Navigationsgerät, ein Infotainment-Gerät, ein Heizungs-, Lüftungs- und/oder Klimasteuergerät oder um ein Mensch-Maschine-Interface handelt, vorgeschlagen, wobei die Anzeigen- und Bedienvorrichtung versehen ist mit den Merkmalen des Anspruchs 1. Einzelne Ausgestaltungen der Erfindung sind Gegenstand der abhängigen Ansprüche.

Weiterhin wird zur Lösung der Aufgabe eine Fahrzeugmittelkonsole mit einer Anzeigen- und Bedienvorrichtung mit den vorstehend genannten Merkmalen sowie ein Fahrzeug mit einer Anzeigen- und Bedienvorrichtung oder einer Mittelkonsole mit einer Anzeigen- und Bedienvorrichtung vorgeschlagen, wobei die Anzeigen- und Bedienvorrichtung die Merkmale des Anspruchs 1 aufweist.

Durch den Einsatz eines Touchscreens mit geschlossener Bedienfläche statt mechanischer Bedientasten weist die erfindungsgemäße Anzeigen- und Bedienvorrichtung keinerlei Bedientastenzwischenräume auf. Bei einem Touchscreen handelt es sich um einen berührungsempfindlichen Bildschirm, der sowohl als Eingabe- als auch als Ausgabegerät dient. Damit unterscheidet sich ein Touchscreen etwa von einem Touchpad, das lediglich als Eingabegerät fungiert und über keine Ausgabefunktion verfügt. Als Touchscreen können beispielsweise LCD-Displays verwendet werden, wie sie in Smartphones und Tablets eingesetzt werden. Auch kommt hierfür der Einsatz gekrümmter Touchscreens in Frage, die bezüglich ihrer Form auf die Kontur einer Fahrzeug-Mittelkonsole angepasst sind oder aber auch flexible Touchscreens, die sich beispielsweise an die Form einer Mittelkonsole anpassen können. Bei der erfindungsgemäßen Anzeigen- und Bedienvorrichtung bietet der Touchscreen die Möglichkeit, Bedientasten anzuzeigen, die Eingabe eines Benutzers aufzunehmen und an die entsprechende Fahrzeugkomponente weiterzuleiten, oder aber auch Informationen einer oder mehrerer Fahrzeugkomponenten anzuzeigen. Auch ist es möglich, dass verschiedene Bereiche des Touchscreens unterschiedliche Aufgaben erfüllen. Darüber hinaus sind die Bedientasten frei programmierbar, so dass die erfindungsgemäße Anzeigen- und Bedienvorrichtung in unterschiedlichen Fahrzeugen mit verschiedenen Fahrzeugkomponenten verwendet werden kann, ohne dass eine Anpassung der Hardware notwendig wäre.

Erfindungsgemäß ist das mechanische Bedienelement als Drehbedienelement oder als Dreh-/Drück-Bedienelement ausgeführt. Dabei kann das Dreh-/Drück-Bedienelement beispielsweise für die Einstellung einer Lautstärke eines CD-Players oder für die Eingabe einer Adresse bei einem Navigationsgerät verwendet werden, während etwa die Einstellung eines Lüftungs- und Klimageräts durch die Bedientasten des Touchscreens erfolgt.

Weiterhin erstreckt sich in einer bevorzugten Ausgestaltung der erfindungsgemäßen Anzeigen- und Bedienvorrichtung der Touchscreen ringförmig um die Aussparung herum. Bei dieser Ausgestaltungsform werden die Bedientasten ringförmig um das mechanische Bedienelement angeordnet, so dass sie sich in unmittelbarer Nähe zu diesem mechanischen Bedienelement befinden. Durch die Anordnung der Bedientasten in unmittelbarer Nähe zum mechanischen Bedienelement erhält der Fahrer eine verbesserte Zugänglichkeit aller für die Bedienung der Fahrzeugkomponenten relevanten Elemente.

In einer weiteren bevorzugten Ausgestaltung der Erfindung ist die Aussparung des Touchscreens als Randaussparung ausgebildet. Dadurch ist der Touchscreen beispielsweise U-förmig oder L-förmig ausgeführt. Dies kann etwa dann vorteilhaft sein, wenn es gewünscht ist, den Bereich, der sich in unmittelbarer Nähe zum Fahrer befindet, für die Anzeige der Tasten sowie für die Eingabe vorzusehen und den Bereich, der vom Benutzer weiter weg liegt und daher weniger gut zu erreichen ist, nicht mit Bedientasten oder Anzeigeelementen zu versehen.

Auch kann in einer weiteren Ausführungsform der Erfindung der Touchscreen dazu ausgelegt sein, ein mechanisches, akustisches oder optisches Feedback bei einer taktilen Eingabe auszugeben. Das mechanische Feedback kann beispielsweise in Form einer Vibration erfolgen, die den Benutzer darauf aufmerksam macht, dass die Anzeigen- und Bedienvorrichtung eine Eingabe erfasst hat. Auch kann der Benutzer durch ein akustisches Signal auf die erfolgte Eingabe aufmerksam gemacht werden oder er kann beispielsweise gewarnt werden, wenn die eingestellten Betriebsparameter in einem kritischen Bereich liegen. Auf ähnliche Weise können optische Signale ausgegeben werden, wie etwa eine blinkende Anzeige, die den Benutzer vor einer Gefahr warnen kann. Das ausgegebene Feedback dient dabei dazu, dass der Fahrer seine Aufmerksamkeit nicht von der Straße lenken muss, um die Anzeigen- und Bedienvorrichtung zu bedienen.

Schließlich kann in einer bevorzugten Ausgestaltung der Erfindung vorgesehen sein, dass der Touchscreen dazu ausgelegt ist, bei Berührung des mechanischen Bedienelements ein definiertes Auswahlmenü anzuzeigen. Dabei kann beispielsweise vorgesehen sein, dass das mechanische Bedienelement als Gangwahlhebel ausgeführt ist und dass bei Berührung des Gangwahlhebels auf dem Touchscreen die Auswahlmöglichkeiten für den Gang angezeigt werden. Auch kann vorgesehen sein, dass das mechanische Bedienelement als Drehbedienelement oder als Dreh-/Drück-Bedienelement ausgeführt ist und dass bei Berührung dieses mechanischen Bedienelements ein Auswahlmenü für das Audio-Abspielgerät eingeblendet wird.

Die Erfindung wird nachfolgend anhand zweier Ausführungsbeispiele unter Bezugnahme auf die Zeichnung näher erläutert. Im Einzelnen zeigen dabei:
- Fig. 1: eine perspektivische Ansicht eines nicht erfindungsgemäßen Beispiels einer Anzeigen- und Bedienvorrichtung, und
- Fig. 2: eine perspektivische Ansicht eines zweiten Ausführungsbeispiels einer Anzeigen- und Bedienvorrichtung.

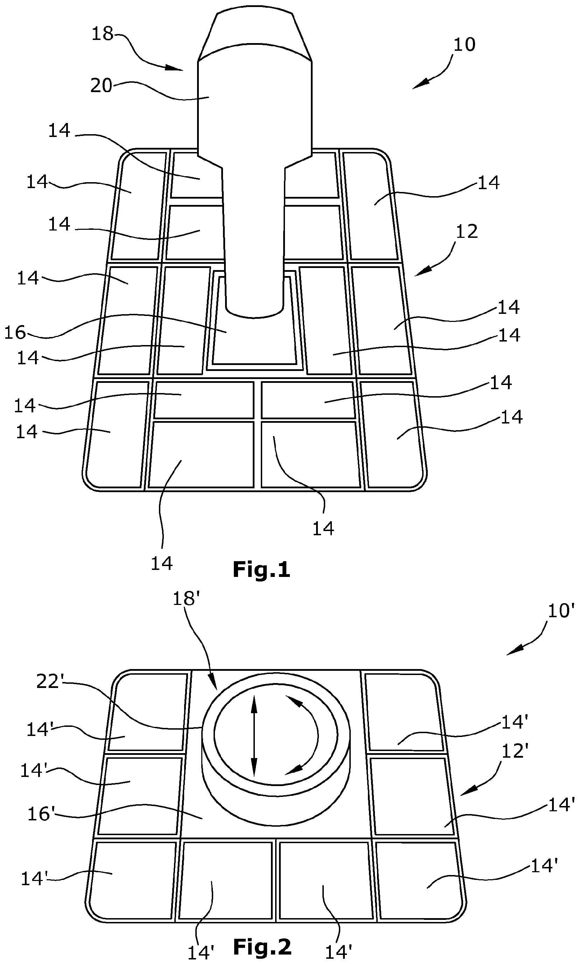

In der Fig. 1 ist eine Anzeigen- und Bedienvorrichtung 10 gezeigt, die einen Touchscreen 12 mit einer Vielzahl von Bedientastenfeldern, nachfolgend Bedientasten 14 genannt, aufweist. Der Touchscreen 12 zeigt weiterhin eine mittig angeordnete Aussparung 16, in der ein mechanisches Bedienelement 18 angeordnet ist. In diesem nicht erfindungsgemäßen Beispiel ist das mechanische Bedienelement 18 als Gangwahlhebel 20 ausgeführt. Eine derartige Anzeigen- und Bedienvorrichtung 10 kann typischerweise in einer Fahrzeug-Mittelkonsole eingesetzt werden, so dass der Fahrer die Gangwahl mechanisch vornimmt und weitere Komponenten des Fahrzeugs mittels der verschiedenen Bedientasten 14 vornehmen kann. Welche Fahrzeugkomponenten in welchem Umfang durch die Anzeigen- und Bedienvorrichtung eingestellt werden, kann dabei nach Belieben programmiert werden, so dass die Anzeigen- und Bedienvorrichtung 10 unabhängig von der Fahrzeugausstattung gefertigt werden kann. Abhängig von der besagten Fahrzeugausstattung kann dann durch eine Anpassung der Anzeigen- und Bedienvorrichtungssoftware bestimmt werden, welche Fahrzeugkomponenten in welchem Maße angesteuert werden können und welche Betriebsparameter durch die Anzeigen- und Bedienvorrichtung 10 zu erfassen sind. Auch kann somit durch eine Anpassung der Software die Anzahl der angezeigten Bedientasten 14 sowie die Größe dieser Bedientasten 14 nach Belieben eingestellt werden. Auch können eine oder mehrere der virtuellen Bedientasten 14 auf einfache Weise ersetzt werden durch Anzeigebereiche, welche keine Eingabe des Benutzers aufnehmen, sondern nur Informationen bezüglich einer oder mehrerer Fahrzeugkomponenten bzw. allgemeine Betriebsinformationen, wie beispielsweise die aktuelle Fahrzeuggeschwindigkeit, den Kraftstoffverbrauch oder die Innenraumtemperatur ausgeben können.

Im Ausführungsbeispiel gemäß der Fig. 2 ist eine Anzeigen- und Bedienvorrichtung 10' dargestellt, wobei die Aussparung 16' des Touchscreens 12' als Randaussparung und das mechanische Bedienelement 18' in Form eines Dreh-/Drück-Bedienelements 22' ausgeführt ist. Dadurch, dass die Aussparung 16' als Randaussparung ausgeführt ist, steht dem Benutzer eine größere Anzeige- und Bedienfläche des Touchscreens 12' zur Verfügung, welche sich in seiner unmittelbaren Nähe befindet. Somit existieren beispielsweise keine aus Sicht des Fahrers betrachtet hinter dem mechanischen Bedienelement 18' angeordnete Bedientasten 14', die dem Fahrer unter Umständen nur schwer zugänglich wären. Der in diesem Ausführungsbeispiel U-förmige Touchscreen 12' bietet dem Benutzer in vielen Anwendungsbeispielen eine leichtere Eingabe der Betriebsparameter und ist sogleich besser ablesbar, da das mechanische Bedienelement 18' die Sicht auf den aktiven Bereich des Touchscreens 12' nicht behindert. Weiterhin ist bei der in der Fig. 2 dargestellten Anzeigen- und Bedienvorrichtung 10' das mechanische Bedienelement 18' als Dreh-/Drück-Bedienelement 22' ausgeführt, welches sich für die Bedienung von Audio-Ausgabegeräten und auch Navigationsgeräten eignet. In diesem Ausführungsbeispiel ist der aktive Bereich des Touchscreens 12' in zahlreiche Bereiche unterteilt, welche jeweils als Bedientasten 14' dienen können oder nach Belieben zu Anzeigeflächen umprogrammiert werden können.

Im nicht erfindungsgemäßen Beispiel sowie im Ausführungsbeispiel ist zu erkennen, dass zwischen den durch den Touchscreen 12 bzw. 12' dargestellten Bedientasten 14 bzw. 14' keine Zwischenräume vorhanden sind, so dass die Anzeigen- und Bedienvorrichtungen 10 bzw. 10' aus dem nicht erfindungsgemäßen Beispiel sowie aus dem Ausführungsbeispiel jeweils vor einem Eindringen von Flüssigkeit oder Speisen geschützt sind.

### BEZUGSZEICHENLISTE

- 10: Anzeigen- und Bedienvorrichtung
- 10': Anzeigen- und Bedienvorrichtung
- 12: Touchscreen
- 12': Touchscreen
- 14: Bedientasten
- 14': Bedientasten
- 16: Aussparung
- 16': Aussparung
- 18: mechanisches Bedienelement
- 18': mechanisches Bedienelement
- 20: Gangwahlhebel
- 22': Dreh-/Drück-Bedienelement

## Patentansprüche

1. Anzeigen- und Bedienvorrichtung (10') für mindestens eine Fahrzeugkomponente, bei der es sich insbesondere um ein Radio, ein CD-und/oder DVD- o.dgl. Audio- und/oder Video-Abspielgerät, ein Navigationsgerät, ein Infotainment-Gerät, ein Heizungs-, Lüftungs- und/oder Klimasteuergerät oder um ein Mensch-Maschine-Interface handelt, mit
- einem Drehbedienelement oder Dreh-/Drückbedienelement (22') eingerichtet zur Vorgabe eines Betriebsparameters mindestens einer ersten Fahrzeugkomponente, und
- einem Touchscreen (12') eingerichtet zur Ausgabe von Informationen, zur Darstellung von Bedientasten (14') und/oder zur Eingabe von weiteren Betriebsparametern für die erste Fahrzeugkomponente und zur Eingabe von Betriebsparametern für mindestens eine zweite Fahrzeugkomponente, wobei
- der Touchscreen (12') eine Aussparung (16') aufweist und
- das Drehbedienelement oder Dreh-/Drückbedienelement (22') in der Aussparung (16') des Touchscreens (12') angeordnet ist.

2. Anzeigen- und Bedienvorrichtung nach Anspruch 1, **dadurch gekennzeichnet, dass** sich der Touchscreen (12') ringförmig um die Aussparung (16') herum erstreckt.

3. Anzeigen- und Bedienvorrichtung nach Anspruch 1, **dadurch gekennzeichnet, dass** die Aussparung (16') des Touchscreens (12') als Randaussparung ausgebildet ist.

4. Anzeigen- und Bedienvorrichtung nach einem der Ansprüche 1 bis 3, **dadurch gekennzeichnet, dass** der Touchscreen (12') dazu ausgelegt ist, ein mechanisches, akustisches oder optisches Feedback bei einer taktilen Eingabe auszugeben.

5. Anzeigen- und Bedienvorrichtung nach einem der Ansprüche 1 bis 4, **dadurch gekennzeichnet, dass** der Touchscreen (12') eine in sich geschlossene Oberfläche aufweist.

6. Anzeigen- und Bedienvorrichtung nach einem der Ansprüche 1 bis 5, **dadurch gekennzeichnet, dass** der Touchscreen (12') dazu ausgelegt ist, bei Berührung des Drehbedienelement oder Dreh-/Drückbedienelement (22') ein definiertes Auswahlmenü anzuzeigen.

7. Mittelkonsole für ein Fahrzeug mit einer Anzeigen- und Bedienvorrichtung (10') nach einem der Ansprüche 1 bis 6.

8. Fahrzeug mit einer Anzeigen- und Bedienvorrichtung (10') nach einem der Ansprüche 1 bis 6 oder mit einer Mittelkonsole nach Anspruch 7.

## Claims

1. A display and operating device (10') for at least one vehicle component which is in particular a radio, a CD and/or DVD player or similar audio and/or video player, a navigation device, an infotainment device, a heating, ventilating and/or air conditioning control unit or a human-machine interface, comprising
- a rotary operating element or rotary/press operating element (22') adapted for setting an operational parameter of at least one first vehicle component, and
- a touch screen (12') adapted for outputting information, for displaying control keys (14') and/or for inputting further operational parameters for said first vehicle component and for inputting operational parameters for at least one second vehicle component, wherein
- said touch screen (12') comprises a recess (16'), and
- said rotary operating element or rotary/press operating element (22') is arranged in said recess (16') of said touch screen (12').

2. The display and operating device according to claim 1, **characterized in that** the touch screen (12') annularly extends around the recess (16').

3. The display and operating device according to claim 1, **characterized in that** the recess (16') of the touch screen (12') is configured as an edge recess.

4. The display and operating device according to any one of claims 1 to 3, **characterized in that** the touch screen (12') is configured for outputting a mechanical, acoustical or optical feedback upon a tactile input.

5. The display and operating device according to any one of claims 1 to 4, **characterized in that** the touch screen (12') comprise a closed surface.

6. The display and operating device according to any one of claims 1 to 5, **characterized in that** the touch screen (12') is configured to display a defined menu upon touch of the rotary operating element or the rotary/press operating element (22').

7. A center console for a vehicle comprising a display and operating device (10') according to any one of claims 1 to 6.

8. A vehicle comprising a display and operating device (10') according to any one of claims 1 to 6 or comprising a center console according to claim 7.

## Revendications

1. Dispositif d'affichage et de commande (10') pour au moins un composant de véhicule, s'agissant en particulier d'une radio, d'un lecteur audio et/ou vidéo CD et/ou DVD ou similaires, d'un dispositif de navigation, d'un dispositif d'info-divertissement, d'un dispositif de commande de chauffage, de ventilation et/ou de climatisation ou d'une interface homme-machine, doté
- d'un élément de commande à rotation ou d'un élément de commande à rotation/pression (22') agencé pour prédéfinir un paramètre opérationnel d'au moins un premier composant de véhicule, et
- d'un écran tactile (12') agencé pour fournir des informations, pour afficher des touches de commande (14') et/ou pour saisir des paramètres opérationnels supplémentaires pour le premier composant de véhicule et pour saisir des paramètres opérationnels pour au moins un deuxième composant de véhicule, dans lequel
- l'écran tactile (12') comporte une cavité (16') et
- l'élément de commande à rotation ou élément de commande à rotation/pression (22') disposé dans la cavité (16') de l'écran tactile (12').

2. Dispositif d'affichage et de commande selon la revendication 1, **caractérisé en ce que** l'écran tactile (12') s'étend de manière annulaire autour de la cavité (16') .

3. Dispositif d'affichage et de commande selon la revendication 1, **caractérisé en ce que** la cavité (16') de l'écran tactile (12') est réalisée comme cavité marginale.

4. Dispositif d'affichage et de commande selon l'une des revendications 1 à 3, **caractérisé en ce que** l'écran tactile (12') est disposé de façon à fournir une rétroaction mécanique, acoustique ou optique lors d'une saisie tactile.

5. Dispositif d'affichage et de commande selon l'une des revendications 1 à 4, **caractérisé en ce que** l'écran tactile (12') comporte une surface fermée sur elle-même.

6. Dispositif d'affichage et de commande selon l'une des revendications 1 à 5, **caractérisé en ce que** l'écran tactile (12') est disposé de façon à afficher un menu de sélection défini lorsque l'élément de commande à rotation ou élément de commande à rotation/pression (22') est touché.

7. Console centrale pour un véhicule dotée d'un dispositif d'affichage et de commande (10') selon l'une des revendications 1 à 6.

8. Véhicule doté d'un dispositif d'affichage et de commande (10') selon l'une des revendications 1 à 6 ou doté d'une console centrale selon la revendication 7.
